# EUROPEAN PATENT APPLICATION

(11) **EP 4 625 572 A1**
(43) Date of publication of application: **01.10.2025**
(21) Application number: 23909377.6
(22) Date of filing: 20.09.2023
(51) Int. Cl.: H01M 10/0525, H01M 10/058, H01M 10/42

(54) **SEPARABLE SECONDARY BATTERY STACK**

(30) Priority: 30.12.2022 CN 202223576537 U
(71) Applicant: BYD Company Limited, Shenzhen, Guangdong 518118 (CN)
(72) Inventor: YIN, Xiaoqiang, Shenzhen, Guangdong 518118 (CN); LIU, Ping, Shenzhen, Guangdong 518118 (CN); LI, Xiangyu, Shenzhen, Guangdong 518118 (CN); WU, Shuang, Shenzhen, Guangdong 518118 (CN); SUN, Tiancheng, Shenzhen, Guangdong 518118 (CN)
(74) Representative: Taor, Simon Edward William
(86) International application number: PCT/CN2023/120096
(87) International publication number: WO 2024/139442

(57) **Abstract**

A separable secondary battery stack, including a positive electrode module, a negative electrode module, and an electrolyte module. Every two of the positive electrode module, the negative electrode module, and the electrolyte module are mutually connected by means of a conveying channel to form a loop; and the conveying channel is used for conveying an electrolyte.

## Description

### CROSS-REFERENCE TO RELATED DISCLOSURES

The present disclosure claims priority to Chinese Patent Application No. 202223576537.1 entitled "SEPARABLE SECONDARY CELL STACK" filed on December 30, 2022, which is incorporated herein by reference in its entirety.

### FIELD

The present disclosure relates to the technical field of secondary batteries, and in particular to a separable secondary cell stack.

### BACKGROUND

As the most widely used lithium-ion battery currently, in recent years, its technical innovation has mainly focused on the pursuit of high energy density, high power density, low cost, long lifetime, high safety, etc. In order to achieve high power and high integration, the current lithium-ion battery manufacturing processes typically adopts alternating stacking or winding molding of positive electrode membrane/separator/negative electrode membrane, followed by injecting electrolyte to infiltrate, and production through formation and capacity grading processes. In the existing lithium-ion battery structures, since a large area of positive and negative electrode interface exists and is filled with an electrolyte, it is likely to develop local short circuit heat under external action, initiate combustion of the electrolyte, and thus a safety accident such as thermal runaway combustion and explosion of the battery. Therefore, there is a need for an entirely new battery structure that fundamentally revolutionizes the safety performance of lithium-ion batteries.

### SUMMARY

In response to the problem of the thermal runaway is existing secondary batteries, the present disclosure provides a separable secondary cell stack.

The technical solutions adopted by the present disclosure to solve the above technical problems are as follows:

The present disclosure provides a separable secondary cell stack including:
a positive electrode module;
a negative electrode module; and
an electrolyte module;
and the positive electrode module, the negative electrode module and the electrolyte module are inter-connected therebetween by a conveying channel to form a loop, and the conveying channel is configured to convey an electrolyte.

In an embodiment, the length of the conveying channel is 0.01m to 100 m.

In an embodiment, the separable secondary cell stack further includes a power module, and the power module is configured to provide power for the electrolyte conveying between the positive electrode module, the negative electrode module and the electrolyte module.

In an embodiment, the power module is arranged on the conveying channels between every two of the positive electrode module, the negative electrode module and the electrolyte module.

In an embodiment, the power module is selected from a peristaltic pump, a plunger pump, a vane pump or a gear pump.

In an embodiment, the conveying channel is connected from the bottom of the positive electrode module and led out from the top of the positive electrode module;
and/or the conveying channel is connected from the bottom of the negative electrode module and led out from the top of the negative electrode module;
and/or the conveying channel is connected from the bottom of the electrolyte module and led out from the top of the electrolyte module.

In an embodiment, the separable secondary cell stack further includes a filter module, and the filter module is configured to filter the electrolyte.

In an embodiment, the filter module is arranged on the conveying channels between every two of the positive electrode module, the negative electrode module and the electrolyte module.

In an embodiment, the filter module is arranged in an upstream position of where the power module is arranged on the conveying channel.

In an embodiment, the filter module is selected from a fiber glass membrane, a polymer membrane, a stainless-steel filter mesh, a porous ceramic column or an activated carbon column.

In an embodiment, the positive electrode module includes a positive electrode housing, a positive electrode filler, a positive electrode current collector, and a positive electrode pole, the positive electrode filler is filled in the positive electrode housing, the positive electrode current collector is arranged in the positive electrode housing and at least partially embedded in the positive electrode filler, and the positive electrode pole is connected with the positive electrode current collector and extends out of the positive electrode housing.

In an embodiment, the housing thickness of the positive electrode housing is 1 mm to 1000 mm.

In an embodiment, the positive electrode current collector has a needle-like structure, a spiral-like structure, a mesh structure or a three-dimensional mesh structure.

In an embodiment, the negative electrode module includes a negative electrode housing, a negative electrode filler, a negative electrode current collector, and a negative electrode pole, the negative electrode filler is filled in the negative electrode housing, the negative electrode current collector is arranged in the negative electrode housing and at least partially embedded in the negative electrode filler, and the negative electrode pole is connected with the negative electrode current collector and extends out of the negative electrode housing.

In an embodiment, the housing thickness of the negative electrode housing is 1 mm to 1000 mm.

In an embodiment, the negative electrode current collector has a needle-like structure, a spiral-like structure, a mesh structure or a three-dimensional mesh structure.

In an embodiment, a detection module for detecting a module status is arranged in the positive electrode module and/or the negative electrode module.

In an embodiment, the electrolyte module includes a liquid storage tank and an electrolyte filled in the liquid storage tank.

In an embodiment, the tank thickness of the liquid storage tank is 1 mm to 100 mm.

In an embodiment, a transparent liquid level observation window is arranged on the side wall of the liquid storage tank.

In an embodiment, one or more of a sampling port, an electrolyte refill port, a lithium refill port or a sensing interface are arranged on the liquid storage tank.

In an embodiment, the liquid storage tank is externally connected with a backup tank.

According to the separable secondary cell stack provided in the present disclosure, the positive electrode module, the negative electrode module and the electrolyte module are independently designed and communicated with each other through the conveying channels, the energy isolation and the material isolation of the positive electrode module, the negative electrode module and the electrolyte module in space are achieved, thereby resulting in a new battery structure, and essentially solving the safety hazard of a secondary battery. At the same time, through modular decomposition of different modules, operations such as efficient production, convenient replacement and maintenance, and convenient recycling of the modules can be achieved, and the low-cost operation of the entire life cycle of the cell stack is achieved. The separable secondary cell stack is provided with an independent electrolyte module, which is convenient for the monitoring and repairing of the health state of the separable secondary cell stack, including electrolyte refill, electrolyte additive refill, active lithium refill, etc., thereby achieving the long life operation of the separable secondary cell stack.

### BRIEF DESCRIPTION OF THE DRAWINGS

FIG. 1 is a schematic diagram of the structure of a separable secondary cell stack provided in the present disclosure;
FIG. 2 is a schematic diagram of the structure of an electrolyte module provided in the present disclosure;

Reference numbers in the drawings of the description are as follows:
1. positive electrode module; 2. negative electrode module; 3. electrolyte module; 31. liquid level observation window; 32. sampling port; 33. electrolyte refill port; 34. lithium refill port; 4. conveying channel; 5. power module; 6. filter module.

### DETAILED DESCRIPTION

In order to make the solved technical problems, solutions and advantageous effects of the present disclosure clearer, the present disclosure will be described in further detail below with reference to the accompanying drawings and embodiments. It is to be understood that the specific embodiments described herein are merely illustration of the present disclosure and are not intended to limit the present disclosure.

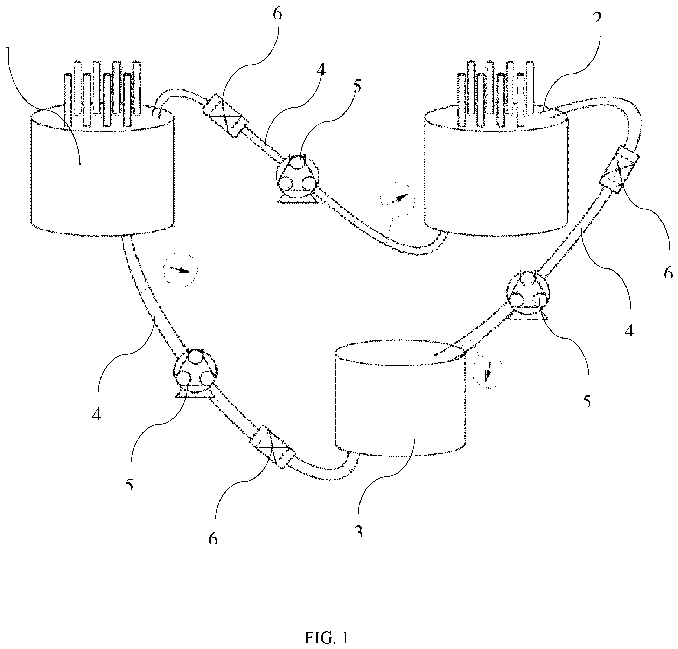

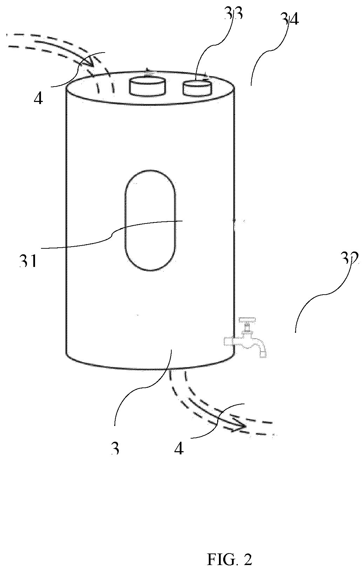

Referring to FIGS. 1 and 2, an embodiment of the present disclosure provides a separable secondary cell stack including a positive electrode module 1, a negative electrode module 2 and an electrolyte module 3, the positive electrode module 1, the negative electrode module 2 and the electrolyte module 3 are inter-connected by a conveying channel 4 to form a loop, and the conveying channel 4 is configured to convey an electrolyte.

The occurrence of battery thermal runaway accidents is mainly caused by the releasing heat of the short circuit of positive and negative electrodes and intensified combustion of electrolyte. In order to intrinsically solve this problem, the positive electrode module 1, the negative electrode module 2 and the electrolyte module 3 of the separable secondary cell stack are independently designed and communicated with each other through the conveying channels 4, the energy isolation and the material isolation of the positive electrode module 1, the negative electrode module 2 and the electrolyte module 3 in space are achieved, thereby resulting in the new battery structure, and essentially solving the safety hazard of the secondary battery. At the same time, through modular decomposition of different modules, operations such as efficient production, convenient replacement and maintenance, and convenient recycling of the modules can be achieved, and the low-cost operation of the entire life cycle of the cell stack is achieved. The separable secondary cell stack is provided with an independent electrolyte module 3, which is convenient for the monitoring and repairing of the health state of the separable secondary cell stack, including electrolyte refill, electrolyte additive refill, active lithium refill, etc., thereby achieving the long-life operation of the separable secondary cell stack.

In some embodiments, the length of the conveying channel is 0.01m to 100 m.

In some embodiments, the length of the conveying channel between the positive electrode module and the negative electrode module is 0.01 m to 0.5 m, the length of the conveying channel between the positive electrode module and the electrolyte module is 0.1 m to 0.5 m, and the length of the conveying channel between the negative electrode module and the electrolyte module is 0.1 m to 0.5 m.

When the length of the conveying channel is in the above range, on one hand, it serves as isolation between the positive electrode module 1, the negative electrode module 2, and the electrolyte module 3, and on the other hand, the conveyance difficulty of the electrolyte is lower.

In some embodiments, the separable secondary cell stack further includes a power module 5, and the power module 5 is configured to provide power for the electrolyte conveying between the positive electrode module 1, the negative electrode module 2 and the electrolyte module 3.

In different embodiments, the number and the position of the power module 5 can be arranged as desired, under the premise of satisfying the transmission of power, the number of the power module 5 may be one or more, and the power modules 5 may be arranged at the inlet or outlet positions of the positive electrode module 1, the negative electrode module 2 and the electrolyte module 3, or on the conveying channels 4.

In some embodiments, one negative electrode module 2 or a plurality of negative electrode modules 2 in series or in parallel may be included, one positive electrode module 1 or a plurality of positive electrode modules 1 in series or in parallel may be included, one conveying channel 4 or a plurality of conveying channels 4 in series or in parallel may be included, one or a plurality of power modules 5 may be included, and when a plurality of power modules 5 are included, the plurality of power modules 5 are independently arranged on one or a plurality of conveying channels 4.

In an embodiment, the power module 5 is arranged on the conveying channels 4 between every two of the positive electrode module 1, the negative electrode module 2 and the electrolyte module 3.

By arranging the power module 5 on the conveying channels 4 between every two of the positive electrode module 1, the negative electrode module 2 and the electrolyte module 3, it is possible to ensure the pressure of the electrolyte flows between the positive electrode module 1, the negative electrode module 2 and the electrolyte module 3, increase the flow rate of the electrolyte in the conveying channels 4 and improve the mass transfer effect.

In some embodiments, the power module 5 is selected from a peristaltic pump, a plunger pump, a vane pump or a gear pump.

In an embodiment, the power module 5 is the peristaltic pump to achieve contactless electrolyte conveying, have better sealing performance, reduce impurity introduction to ensure the purity of the electrolyte, and have better operating stability.

In some embodiments, the conveying channels 4 may be made of metallic materials, such as Fe, Cu, Al, alloys thereof, plated pieces, etc., as well as non-metallic materials, such as rubber, silicone, PP, PE, PET, PTFE, etc.. The conveying channels 4 may be connected from the middle, top, bottom, and any other position of the positive electrode module 1, the negative electrode module 2, and the electrolyte module 3. The number of the conveying channels 4 between two adjacent modules is one or more.

In some embodiments, the conveying channel 4 is connected from the bottom of the positive electrode module 1 and led out from the top of the positive electrode module 1;
and/or the conveying channel 4 is connected from the bottom of the negative electrode module 2 and led out from the top of the negative electrode module 2;
and/or the conveying channel 4 is connected from the bottom of the electrolyte module 3 and led out from the top of the electrolyte module 3.

By connecting the conveying channels from the bottom of each module and leading out from the top, the efficiency of mass transfer is enhanced.

In some embodiments, the separable secondary cell stack further includes a filter module 6, and the filter module 6 is configured to filter the electrolyte.

By the filter module 6 for filtering other substances other than the electrolyte between the positive electrode module 1, the negative electrode module 2 and the electrolyte module 3, micro short-circuit self-discharge caused by the peeling off of the positive and negative electrode active materials is prevented.

In some embodiments, one or a plurality of filter modules are included, and when a plurality of filter modules are included, the plurality of filter modules are independently arranged on one or a plurality of conveying channels.

The filter module 6 may be arranged at the inlet or outlet positions of the positive electrode module 1, the negative electrode module 2 and the electrolyte module 3, or on the conveying channels 4.

In an embodiment, the filter module is arranged on the conveying channels between every two of the positive electrode module, the negative electrode module and the electrolyte module.

By arranging the filter module on the conveying channels between every two of the positive electrode module, the negative electrode module and the electrolyte module, it is possible to ensure smooth flow of the electrolyte between the positive electrode module, the negative electrode module, and the electrolyte module and avoid blockage.

In some embodiments, the filter module is arranged in an upstream position of where the power module is arranged on the conveying channel.

By arranging the filter module in the upstream position of the power module, it is advantageous to intercept impurities flowing into the power module and ensure the operation stability and the service life of the power module.

In some embodiments, the filter module 6 is selected from a fiber glass membrane, a polymer membrane, a stainless-steel filter mesh, a porous ceramic column or an activated carbon column.

In an embodiment, the filter module 6 is the porous ceramic column, which can reduce the self-discharge caused by the peeling off the active materials of the positive and negative electrode modules while improving the lifetime of the power module 5, and the porous ceramic column is also convenient for subsequent maintenance and replacement.

In some embodiments, one or a plurality of positive electrode modules 1 are included, and when a plurality of positive electrode modules 1 are included, the plurality of positive electrode modules 1 are connected in series or in parallel.

In some embodiments, the positive electrode module 1 includes a positive electrode housing, a positive electrode filler, a positive electrode current collector, and a positive electrode pole, the positive electrode filler is filled in the positive electrode housing, the positive electrode current collector is arranged in the positive electrode housing and at least partially embedded in the positive electrode filler, and the positive electrode pole is connected with the positive electrode current collector and extends out of the positive electrode housing.

In some embodiments, the positive electrode housing is square, cylindrical, or irregular in shape.

In some embodiments, the positive electrode housing is selected from housing structures of Fe and alloys thereof, Al and alloys thereof, PP, PE, PTFE, PVDF, or PET.

In some embodiments, the housing thickness of the positive electrode housing is 1 mm to 1000 mm.

When the housing thickness of the positive electrode housing is in the above range, the positive electrode housing has the higher mechanical strength and durability to prevent the leakage of the electrolyte.

In an embodiment, the positive electrode housing is a stainless-steel cylinder with a housing thickness of 5 mm to 50 mm, a positive electrode electrolyte inlet is arranged at the bottom of the positive electrode housing and a positive electrode electrolyte outlet is arranged at the top of the positive electrode housing. This structure ensures a certain mechanical strength of the module and durability of the housing, and is advantageous to achieve efficient electrolyte mass transfer.

In some embodiments, the positive electrode current collector has a needle-like structure, a spiral-like structure, a mesh structure or a three-dimensional mesh structure.

In some embodiments, the positive electrode current collector has a spiral-like structure, a mesh structure or a three-dimensional mesh structure.

The spiral-like structure, the mesh structure or the three-dimensional mesh structure of the positive electrode current collector is advantageous to increase the contact area between the positive electrode current collector and the positive electrode filler, and reduce the interface electronic conduction impedance.

In some embodiments, the positive electrode current collector may be made of Al, Fe, alloys thereof, and plated pieces.

In some embodiments, the positive electrode current collector has a three-dimensional mesh structure, and the positive electrode current collector includes a plurality of crosslinked metallic aluminum wires having a diameter of 0.1 mm to 10 mm.

In some embodiments, the positive electrode pole is a metallic aluminum cable, one end of the metallic aluminum cable is connected with the positive electrode current collector, the other end of the metallic aluminum cable extends out of the positive electrode housing, and the metallic aluminum cable is connected with the external system through a plug-in type cable.

In some embodiments, the positive electrode filler is a powder filler, a membrane filler, or a block filler, and the positive electrode filler includes a positive electrode electroactive material, a positive electrode conductive agent, a positive electrode binder, and a positive electrode functional filler in a mass ratio of (100-x-y-z): x: y: z (x = 0 to 50, y = 0 to 50, z = 0 to 50), wherein the positive electrode electroactive material may be lithium-ion battery positive electrode materials such as LiFePO₄, LiFeₓMn₁₋ₓPO₄(0≤x≤1), LiNiₓCo_{y}Mn_{1-x-y}O₂(0≤x≤1,0≤y≤1), LiNixCoyAl_{1-x-y}O₂(0≤x≤1, 0≤y≤1), LiNiₓCo_{y}Mn_{z}Al_{1-x-y-z}O₂(0≤x≤1, 0≤y≤1, 0≤z≤1), LiMn₂O₄, LiMnO₂, LiNiO₂, LiCoO₂, Li₂MnO₃, LiNi_{0.5}Mn_{1.5}O₂, etc., sodium-ion battery positive electrode materials such as Prussian white, NaNiₓFe_{y}Mn_{1-x-y}O₂(0≤x≤1, 0≤y≤1), Na₃V₂(PO₄)₃, Na₂FeP₂O₇, Na₂Fe₂(SO₄)₃, etc., magnesium-ion battery positive electrode materials such as Mo₆S₈, TiS₂, MoS₂, V₂O₅, MoO₃, MnSiO₄, FePO₄, FePO₄F, Ni(CN)₆•nH₂O, etc., aluminum-ion battery positive electrode materials such as pyrolytic graphite, TiO₂, CuO, Co₃O₄, SnO₂, WO₃, Co₉S₈, S, etc., zinc-ion battery positive electrode materials such as MnO₂, Mn₂O₃, VS₂, LiV₃O₈, Zn_{0.25}V₂O₅, Na₃V₂(PO₄)₃, ZnMn₂O₄, etc., calcium-ion battery positive electrode materials such as CaMn₂O₄, CaMoO₃, AxMFe(CN)₆•yH₂O(A=Li, Na, Mg, Ca, M=Ba, Ti, Mn, Fe, Co, Ni) etc., and other positive electrode materials for electrochemical systems. The positive electrode conductive agent may be one or more of graphite powder, carbon black, carbon nanotubes, graphene, polypyrrole, polyaniline, polythiophene, etc.. The positive electrode binder may be one or more of PVDF, PTFE, PMMA, PEO, etc.. The positive electrode functional filler may be one or more of electron-conductive fillers such as a conductive carbon fiber, a conductive carbon rod, a conductive carbon tube, and ion-conductive fillers such as a fiber glass, Al₂O₃, SiO₂, etc.. In some embodiments, the positive electrode filler is LiFePO₄, carbon black, PVDF mixed uniformly in a mass ratio of 80-95%: 2-10%: 3-10%, and then filled in the positive electrode housing with a bulk density of 1.0 to 2.2 g/cm³.

In some embodiments, one or a plurality of negative electrode modules 2 are included, and when a plurality of negative electrode modules 2 are included, the plurality of negative electrode modules 2 are connected in series or in parallel.

In some embodiments, the negative electrode module 2 includes a negative electrode housing, a negative electrode filler, a negative electrode current collector, and a negative electrode pole, the negative electrode filler is filled in the negative electrode housing, the negative electrode current collector is arranged in the negative electrode housing and at least partially embedded in the negative electrode filler, and the negative electrode pole is connected with the negative electrode current collector and extends out of the negative electrode housing.

In some embodiments, the negative electrode housing is square, cylindrical, or irregular in shape.

In some embodiments, the negative electrode housing is selected from housing structures of Cu and alloys thereof, Fe and alloys thereof, Al and alloys thereof, Ti and alloys thereof, PP, PE, PTFE, PVDF, or PET.

In some embodiments, the housing thickness of the negative electrode housing is 1 mm to 1000 mm.

When the housing thickness of the negative electrode housing is in the above range, the negative electrode housing has the higher mechanical strength and durability to prevent the leakage of the electrolyte.

In an embodiment, the negative electrode housing is a stainless-steel internal copper-plated cylinder with a housing thickness of 5 mm to 50 mm, a negative electrode electrolyte inlet is arranged at the bottom of the negative electrode housing and a negative electrode electrolyte outlet is arranged at the top of the negative electrode housing. This structure ensures a certain mechanical strength of the module and durability of the housing, and is advantageous to achieve efficient electrolyte mass transfer.

In some embodiments, the negative electrode current collector has a needle-like structure, a spiral-like structure, a mesh structure or a three-dimensional mesh structure.

In some embodiments, the negative electrode current collector has a spiral-like structure, a mesh structure or a three-dimensional mesh structure.

The spiral-like structure, the mesh structure or the three-dimensional mesh structure of the negative electrode current collector is advantageous to increase the contact area between the negative electrode current collector and the negative electrode filler, and reduce the interface electronic conduction impedance.

In some embodiments, the negative electrode current collector may be made of Al, Cu, Ni, Ti, alloys thereof, and plated pieces.

In some embodiments, the negative electrode current collector has a three-dimensional mesh structure, and the negative electrode current collector includes a plurality of crosslinked metallic copper wires having a diameter of 0.1 mm to 10 mm.

In some embodiments, the negative electrode pole is a metallic copper cable, one end of the metallic copper cable is connected with the negative electrode current collector, the other end of the metallic copper cable extends out of the negative electrode housing, and the metallic copper cable is connected with the external system through a plug-in type cable.

In some embodiments, the negative electrode filler is a powder filler, a membrane filler, or a block filler, and the negative electrode filler includes a negative electrode electroactive material, a negative electrode conductive agent, a negative electrode binder, and a negative electrode functional filler in a mass ratio of (100-x-y-z): x: y: z (x = 0 to 50, y = 0 to 50, z = 0 to 50), wherein the negative electrode electroactive material may be one or more of lithium-ion and sodium-ion battery negative electrode materials such as graphite, hard carbon, soft carbon, silicon, silicon monoxide, Li₄Ti₅O₁₂, TiO₂, Fe₂O₃, MoS₂, etc., magnesium-ion battery negative electrode materials such as Mg, Sn, Bi, and alloys thereof, aluminum-ion battery negative electrode materials such as Al and alloys thereof, zinc-ion battery negative electrode materials such as Zn and alloys thereof, etc., and calcium-ion battery negative electrode materials such as Ca, Sn, Si, graphite, polyimide, etc.. The negative electrode conductive agent may be one or more of conductive graphite, super P, carbon black, carbon nanotubes, grapheme, etc.. The negative electrode binder may be one or more of methyl cellulose, styrene butadiene rubber, polyacrylic acid, sodium alginate, polyimide, polypropylene alcohol. The negative electrode functional filler may be one or more of electron-conductive fillers such as a conductive carbon fiber, a conductive carbon rod, a conductive carbon tube, and ion-conductive fillers such as fiber glass, Al₂O₃, SiO₂, etc..

In some embodiments, the negative electrode filler is artificial graphite, carbon black, PTFE mixed uniformly in a mass ratio of 80-95%: 2-10%: 3-10%, and then filled in negative electrode housing with at bulk density of 0.8 to 1.4 g/cm³.

In some embodiments, a detection module for detecting a module status is arranged in the positive electrode module 1 and the negative electrode module 2.

In particular, the detection module may be a module for detecting a temperature, a pressure, a viscosity, a flow rate, or a substance concentration, or a module for detecting an electrical performance parameter such as current or voltage. By detecting the status of the positive electrode module 1 and the negative electrode module 2, the operating status of the separable secondary cell stack can be known, and adjustments can be made to ensure the stability of the operating status of the separable secondary cell stack.

In some embodiments, the electrolyte module 3 includes a liquid storage tank and an electrolyte filled in the liquid storage tank.

In some embodiments, the liquid storage tank is selected from housing structures of Cu and alloys thereof, Fe and alloys thereof, Al and alloys thereof, Ti and alloys thereof, PP, PE, PTFE, PVDF, or PET.

In some embodiments, the tank thickness of the liquid storage tank is 1 mm to 100 mm.

When the tank thickness of the liquid storage tank is in above range, the liquid storage tank has the higher mechanical strength and durability to prevent the leakage of the electrolyte.

In some embodiments, the liquid storage tank is stainless-steel cylindrical tank with a wall thickness of 10 mm to 50 mm, and the material structure can achieve good durability and corrosion resistance while achieving low cost.

In some embodiments, a transparent liquid level observation window 31 is arranged on the side wall of the liquid storage tank for observing the electrolyte storage in the liquid storage tank. When the electrolyte storage is insufficient, the liquid storage tank can be refilled.

In some embodiments, one or more of a sampling port 32, an electrolyte refill port 33, a lithium refill port 34 or a sensing interface (not shown) are arranged on the liquid storage tank.

The sampling port 32 is configured to sample the electrolyte in the liquid storage tank to detect parameters such as impurity content and lithium salt content in the electrolyte and understand the state of the electrolyte.

The electrolyte refill port 33 is configured to refill the electrolyte to ensure that the electrolyte is in sufficient state.

The lithium refill port 34 is configured to refill lithium salt in electrolyte to ensure the electrical conductivity of electrolyte.

The sensing interface is configured to connect sensors, such as a temperature sensor, a level sensor, etc., to monitor the physical state of the electrolyte.

In some embodiments, the liquid storage tank is externally connected with a backup tank to facilitate electrolyte switching or emptying.

The present disclosure is further described below by way of specific embodiments.

### Embodiment 1

The embodiment is used to verify the actual electrochemical performance of a separable secondary lithium iron phosphate cell stack. The specific implementation steps are as follows:
1. The lithium iron phosphate powder, the conductive agent Super P and the binder PVDF are ball milled and mixed at a low speed of 50 to 100rmp in the mass ratio of 90%: 5%: 5% to obtain a positive electrode filler. The artificial graphite powder, the conductive agent carbon black and the binder PVDF are ball milled and mixed at a low speed of 50 to 100 rmp in the mass ratio of 95%: 2%: 3% to obtain the negative electrode filler.
2. The positive electrode filler is filled into the inner cavity of a stainless-steel cylindrical positive electrode housing with a diameter of 0.5 m and a height of 1 m. A positive electrode current collector made of two specifications of metallic aluminum wires with a diameter of 1 mm and 1 cm is previously arranged in the inner cavity. Two rows of eight aluminum rods with a diameter of 1 cm pass through in the height direction to serve as positive electrode poles. A three-dimensional mesh made of the aluminum wire with a diameter of 1 mm according to the hole diameter of 2×2×2cm is in the remaining space, and is connected with the adjacent positive electrode poles. The filling amount of the positive electrode filler is controlled at about 300 ± 10 kg, and the bulk density of the filler is about 1.6 g/cm³. A positive electrode module is obtained by sealing.
3. The negative electrode filler is filled into the inner cavity of a stainless-steel cylindrical negative electrode housing with a diameter of 0.5 m and a height of 1 m. A negative electrode current collector made of two specifications of metallic copper wires with a diameter of 1 mm and 1 cm is previously arranged in the inner cavity. Two rows of eight copper rods with a diameter of 1 cm pass through in the height direction to serve as negative electrode poles. A three-dimensional mesh made of the copper wire with a diameter of 1 mm according to the hole diameter of 2×2×2cm is in the remaining space, and is connected with the adjacent negative electrode poles. The filling amount of the negative electrode filler is controlled at about 150±5kg, and the bulk density of the filler is about 0.8 g/cm³. A negative electrode module is obtained by sealing.
4. A silicone tube with a diameter of 10 cm and a length of 1.5 m is used as a conveying channel to connect the positive electrode module, the negative electrode module, and the stainless-steel electrolyte storage tank with a diameter of 0.5 m and a height of 1 m, and a peristaltic pump with a power of 1 kW is arranged on each module connecting channel, and a separable secondary cell stack is obtained.
5. The electrolyte storage tank is filled with standard lithium-ion battery electrolyte (about 200 kg), and the peristaltic pump is turned on (pump rate set to 50 L/min), and the electrolyte infiltration of each module is performed.
6. Normal formation and capacity grading processes are performed after the infiltration is completed.

### Embodiment 2

The embodiment is used to verify the actual electrochemical performance of a separable secondary lithium iron phosphate cell stack. The specific implementation steps are similar to embodiment 1 with the following differences:
1. The positive electrode material is a Prussian white type positive electrode material, the filling amount of the positive electrode filler is 250 ± 10 kg, and the density of the filler is about 1.4 g/cm³;
2. The negative electrode material is hard carbon, the filling amount of the negative electrode filler is 150 ± 5 kg, and the density of the filler is about 0.8 g/cm³;
3. The negative electrode current collector is the metallic aluminum wire;
4. The electrolyte is standard sodium-ion battery electrolyte, and the injection volume is about 200 kg.

### Performance Testing

Simulated charge and discharge tests are performed on the separable secondary cell stack as above by using an electrochemical charge and discharge test cabinet, to verify the feasibility of the charge and discharge of the separable secondary cell stack under different chemical systems. Specifically, for embodiment 1/2, under the normal temperature environment (25 ± 3 °C) and the normal operation of the electrolyte delivery pump, using a test current of 3000A, the simulated constant current charge and discharge tests are performed in the voltage intervals of 2.0 to 3.65 V and 2.0 to 3.5 V, respectively, to obtain the electrical performance data of the secondary cell stack.

Specific test results are as follows:

| | Electrochemical Systems | Voltage interval | Discharge average voltage | Discharge capacity |
|---|---|---|---|---|
| Embodiment 1 | LiFePO₄+Graph ite | 2.0-3.65V | 3.2V | 35422Ah |
| Embodiment 2 | Prussian White + Hard Carbon | 2.0-3.5V | 3.0V | 23596Ah |

Simulated charge and discharge test results of the separable secondary cell stacks of different electrochemical systems show that the separable secondary cell stack may achieve normal cyclic charge and discharge and cycling while achieving modular separation of the positive electrode module, the negative electrode module and the electrolyte. By modularly separating the positive and negative electrodes and the electrolyte, the highly safety and the low-cost operation of the high-capacity secondary cell stack is realized.

The above is the preferred embodiments of the present disclosure and is not intended to limit the present disclosure, and any modifications, equivalents, and improvements within the spirit and principles of the present disclosure are intended to be included within the scope of the present disclosure.

## Claims

1. A separable secondary cell stack, comprising:
a positive electrode module (1);
a negative electrode module (2); and
an electrolyte module (3);
the positive electrode module (1), the negative electrode module (2) and the electrolyte module (3) being inter-connected therebetween by a conveying channel (4) to form a loop, and the conveying channel (4) being configured to convey an electrolyte.

2. The separable secondary cell stack according to claim 1, wherein the length of the conveying channel (4) is 0.01m to 100 m.

3. The separable secondary cell stack according to claim 1 or 2, further comprising a power module (5), the power module (5) being configured to provide power for the electrolyte conveying between the positive electrode module (1), the negative electrode module (2) and the electrolyte module (3).

4. The separable secondary cell stack according to claim 3, wherein the power module (5) is arranged on the conveying channels (4) between every two of the positive electrode module (1), the negative electrode module (2) and the electrolyte module (3).

5. The separable secondary cell stack according to claim 3, wherein the power module (5) is selected from a peristaltic pump, a plunger pump, a vane pump or a gear pump.

6. The separable secondary cell stack according to any one of claims 1 to 5, wherein the conveying channel (4) is connected from the bottom of the positive electrode module (1) and led out from the top of the positive electrode module (1);
and/or the conveying channel (4) is connected from the bottom of the negative electrode module (2) and led out from the top of the negative electrode module (2);
and/or the conveying channel (4) is connected from the bottom of the electrolyte module (3) and led out from the top of the electrolyte module (3).

7. The separable secondary cell stack according to claim 3, further comprising a filter module (6), the filter module (6) being configured to filter the electrolyte.

8. The separable secondary cell stack according to claim 7, wherein the filter module (6) is arranged on the conveying channels (4) between every two of the positive electrode module (1), the negative electrode module (2) and the electrolyte module (3).

9. The separable secondary cell stack according to claim 7, wherein the filter module (6) is arranged in an upstream position of where the power module (5) is arranged on the conveying channel (4).

10. The separable secondary cell stack according to claim 7, wherein the filter module (6) is selected from a fiber glass membrane, a polymer membrane, a stainless-steel filter mesh, a porous ceramic column or an activated carbon column.

11. The separable secondary cell stack according to any one of claims 1 to 10, wherein the positive electrode module (1) comprises a positive electrode housing, a positive electrode filler, a positive electrode current collector, and a positive electrode pole, the positive electrode filler is filled in the positive electrode housing, the positive electrode current collector is arranged in the positive electrode housing and at least partially embedded in the positive electrode filler, and the positive electrode pole is connected with the positive electrode current collector and extends out of the positive electrode housing.

12. The separable secondary cell stack according to claim 11, wherein the housing thickness of the positive electrode housing is 1 mm to 1000 mm.

13. The separable secondary cell stack according to claim 11, wherein the positive electrode current collector has a needle-like structure, a spiral-like structure, a mesh structure or a three-dimensional mesh structure.

14. The separable secondary cell stack according to any one of claims 1 to 13, wherein the negative electrode module (2) comprises a negative electrode housing, a negative electrode filler, a negative electrode current collector, and a negative electrode pole, the negative electrode filler is filled in the negative electrode housing, the negative electrode current collector is arranged in the negative electrode housing and at least partially embedded in the negative electrode filler, and the negative electrode pole is connected with the negative electrode current collector and extends out of the negative electrode housing.

15. The separable secondary cell stack according to claim 14, wherein the housing thickness of the negative electrode housing is 1 mm to 1000 mm.

16. The separable secondary cell stack according to claim 14, wherein the negative electrode current collector has a needle-like structure, a spiral-like structure, a mesh structure or a three-dimensional mesh structure.

17. The separable secondary cell stack according to any one of claims 1 to 16, wherein a detection module for detecting a module status is arranged in the positive electrode module (1) and/or the negative electrode module (2).

18. The separable secondary cell stack according to any one of claims 1 to 17, wherein the electrolyte module (3) comprises a liquid storage tank and an electrolyte filled in the liquid storage tank.

19. The separable secondary cell stack according to claim 18, wherein the tank thickness of the liquid storage tank is 1 mm to 100 mm.

20. The separable secondary cell stack according to claim 18, wherein a transparent liquid level observation window (31) is arranged on the side wall of the liquid storage tank.

21. The separable secondary cell stack according to claim 18, wherein one or more of a sampling port (32), an electrolyte refill port (33), a lithium refill port (34) or a sensing interface are arranged on the liquid storage tank.

22. The separable secondary cell stack according to claim 18, wherein the liquid storage tank is externally connected with a backup tank.
